# EUROPEAN PATENT APPLICATION

(11) **EP 4 714 249 A1**
(43) Date of publication of application: **25.03.2026**
(21) Application number: 24201020.5
(22) Date of filing: 18.09.2024
(51) Int. Cl.: A01D 41/127, A01D 43/08, A01D 75/18, E05C 19/14

(54) **A DOOR SECURING MECHANISM FOR AN AGRICULTURAL IMPLEMENT**

(71) Applicant: CNH Industrial Belgium N.V., 8210 Zedelgem (BE)
(72) Inventor: Desmet, Stefaan, 8210 Zedelgem (BE); Duquesne, Frank, 8210 Zedelgem (BE); Passchyn, Tim, 8210 Zedelgem (BE)
(74) Representative: CNH Industrial IP Department

(57) **Abstract**

In an agricultural implement according to the invention, for example a combine harvester, a hinged door (6) provides access to an aperture (12) in a wall (2) of a walled compartment (1). A camera may be attached to said door, for monitoring the interior of the compartment. The door (6) is configured to be locked and unlocked by an overcenter mechanism (7) characterized in that it requires an auxiliary tool for locking and unlocking the mechanism. In particular, the mechanism comprises a pivotable rod (14) pivotable about a first pivot axis (15) relative to the door, and an overcenter arm (21) that is pivotable at one end relative to a lever (20) fixed to or integral with the rod (14). The other end of the overcenter arm is attachable to the wall (2) comprising the aperture (12) covered by the door. The overall dimensions of the mechanism are such that pivoting the rod (14) to thereby lock or unlock the mechanism requires an auxiliary tool. The rod could for example be provided with a polygonal cross-section, necessitating the use of a wrench (35) or similar gripping tool for pivoting the rod.

## Description

### Field of the invention

The present invention is related to agricultural machinery. The invention is applicable for example in large implements such as combine harvesters and forage harvesters.

### State of the art.

Combine or forage harvesters are large and technically complex machines comprising multiple moving components operating in confined compartments, many of which are difficult to access. Regular inspection, monitoring and cleaning of such components is enabled by window-type apertures closed off by hinged doors or similar closures. As many of the movable components are potentially harmful for a person entering or reaching into the compartments, safety precautions are needed for opening such apertures.

### Summary of the invention

In an agricultural implement according to the invention, for example a combine harvester, a hinged door provides access, for example for inspection, monitoring and/or cleaning, to an aperture in a wall of a walled compartment, for example a chopper compartment of the harvester. The compartment may have walls on all sides so that it is shielded from the exterior of the compartment, but it may also be open to the exterior at one or more sides.

A camera may be attached to said door, for monitoring the interior of the compartment. The door is configured to be locked and unlocked by an overcenter mechanism characterized in that it requires an auxiliary tool for locking and unlocking the mechanism. In particular, the mechanism comprises a pivotable rod pivotable about a first pivot axis relative to the door, and an overcenter arm that is pivotable at one end relative to a lever fixed to or integral with the rod. The other end of the overcenter arm is attachable to the wall comprising the aperture covered by the door. The overall dimensions of the mechanism are such that pivoting the rod to thereby lock or unlock the mechanism requires an auxiliary tool. Preferably, the overcenter mechanism is dimensioned so that pivoting the rod requires a torque of at least 1Nm, preferably 1,5Nm and even more preferably 2Nm. The rod could for example be provided with a polygonal cross-section, for example a square or hexagonal cross-section, necessitating the use of a wrench or similar gripping tool for pivoting the rod. The invention thereby provides a degree of safety, making it impossible for an operator to unlock the door manually. According to preferred embodiments, the compartment has a crop inlet and a crop outlet wherein crop is moved from the inlet of the compartment to the outlet, possibly with the crop being processed between the inlet and the outlet (as is the case in the chopper compartment). Especially for this type of compartments provided with an aperture for inspection and/or cleaning, the invention realises an increased degree of safety against the aperture being left uncovered and unlocked, thereby reducing the risk of injuries of persons accessing the aperture when processing tools are active, as well as reducing crop loss through the open apertures.

### Brief description of the figures

Figure 1 shows a chopper compartment of a combine harvester equipped with a monitoring camera secured by a mechanism in accordance with an embodiment of the invention.
Figure 2 is a close-up view of the monitoring camera attached to a wall of the chopper compartment shown in Figure 1.
Figure 3 shows the camera housing in an open condition, revealing a monitoring aperture in the wall of the chopper compartment.
Figure 4 shows the camera housing pivoted towards the chopper wall, prior to securing the camera.
Figure 5 is a detailed image of the securing mechanism in the condition shown in Figure 4.
Figures 6 and 7 illustrate the requirement of using an auxiliary tool for locking and unlocking the mechanism.

### Detailed description of preferred embodiments of the invention

Preferred embodiments will now be described with reference to the drawings. The detailed description is not limiting the scope of the invention, which is defined only by the appended claims.

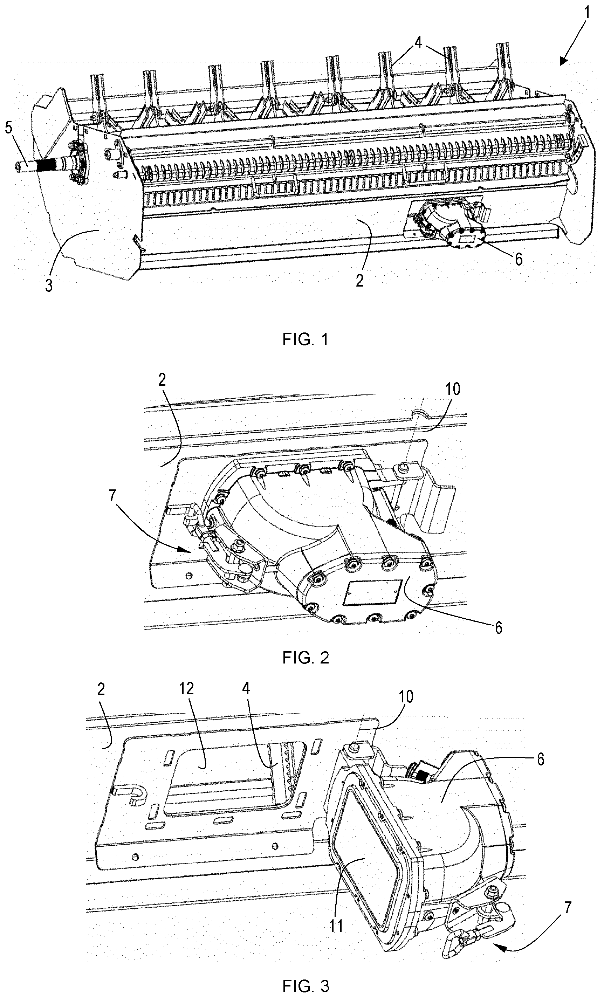

Figure 1 illustrates a chopper compartment 1, hereafter also abbreviated as 'chopper', of a combine harvester. The chopper is located at the rear of the combine and is configured to receive crop residue from the threshing and cleaning sections of the harvester. From the chopper, chopped residue particles are delivered to a spreader configured to eject the particles in an area behind the advancing combine.

The chopper 1 comprises a housing having front and rear walls and planar sidewalls. The rear wall 2 and left-hand sidewall 3 are indicated in the drawing. Chopper knives 4 are coupled to a central axle 5 that is rotatable within the housing. The knives 4 are configured to chop the crop material against counterknives (not shown) which are stationary relative to the housing. This chopper configuration is known as such and no further detailed description is therefore included here.

It is seen that the chopper 1 further comprises a camera housing 6 mounted against the rear housing wall 2. Figure 2 shows a close-up view of the camera housing 6, which contains a camera of a type and dimensions known for monitoring in agricultural machinery. The camera is configured to capture images of the interior of the chopper compartment during operation of the harvester. To this aim, an aperture is provided in the rear wall 2 and the camera housing is mounted onto said aperture, thereby effectively closing off the aperture. The camera housing 6 is in fact configured to act as a hinged door capable of closing off or opening the aperture by rotation about a hinge axis 10. An electric cable (not shown) may connect the camera to a control unit (also not shown) configured to process the captured images, unless the camera is configured to operate wirelessly. The camera housing 6 will hereafter also be referred to as the 'camera-door', due to the housing's double function of acting as a camera enclosure and as a hinged door.

The camera-door 6 comprises a front window that fits into the aperture when the door is closed. Opening the camera-door is required regularly for cleaning the window or during maintenance or repairs. From a safety standpoint, it is advantageous that the door cannot be opened manually and that a tool is required for opening and re-closing the door. Such a safety feature is provided by securing mechanisms according to the invention. One embodiment of such a securing mechanism 7 is implemented in conjunction with the camera-door 6 illustrated in the drawings.

The securing mechanism 7 is an overcenter mechanism, the principle of which is known as such. However, the mechanism of the invention includes an additional safety feature as described hereafter with reference to Figures 3 to 6.

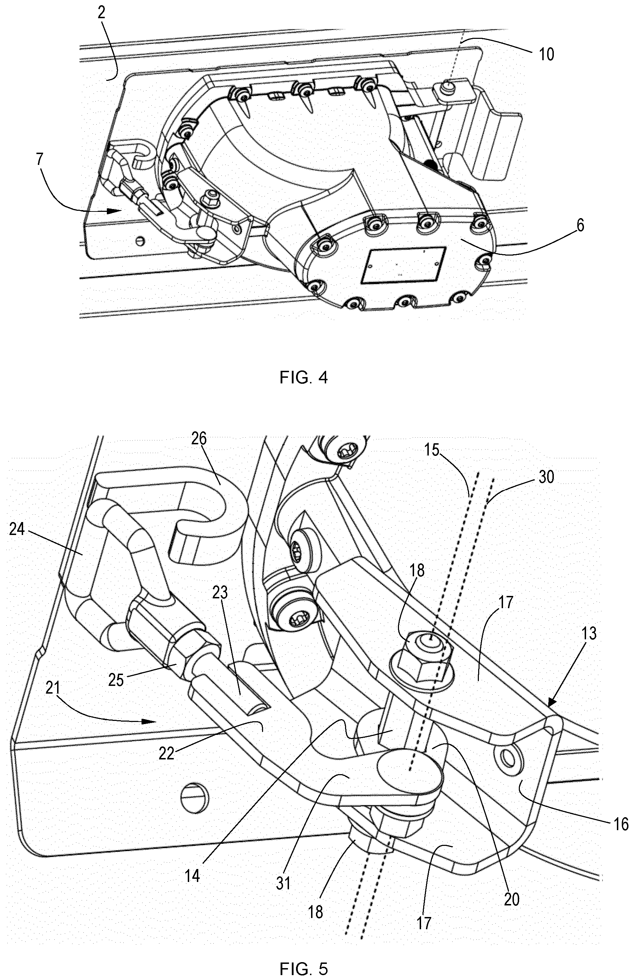

Figure 3 shows the camera-door 6 in the open condition, enabling for example to clean the window 11 of the camera 6. The aperture 12 in the rear wall 2 is visible, as is one of the chopper knives 4. The camera-door 6 is closed by rotating it about the hinge axis 10 until it approaches the rear wall 2, as illustrated in Figures 4 and 5, the latter showing a further close-up of the mechanism 7 as such.

The overcenter mechanism 7 is mounted on a support bracket 13 bolted to the side of the camera housing 6. The mechanism comprises a rod 14 arranged to be pivotable about a first pivot axis 15, relative to the bracket 13, i.e. relative to the camera-door 6. The first pivot axis 15 is fixed with respect to the camera-door and essentially parallel to the hinge axis 10. In the embodiment shown, the support bracket 13 is a U-shaped profile having a base 16 and two upstanding U-legs 17 with the base 16 being bolted to the side of the camera housing. The rod 14 is mounted pivotably between the U-legs 17 via bolt connections 18. The rod 14 can however be pivotably coupled to the door in any other suitable way.

A plate element 20 is fixed to or integral with the rod 14 and extends outward from the rod in the direction perpendicular to the rod's longitudinal direction. This plate element 20 thereby performs the function of a lever 20 when the rod 14 is rotated about the first pivot axis 15.

The mechanism further comprises an overcenter arm 21. In the embodiment shown, the overcenter arm comprises a plate element 22 attached to a threaded pin 23, but other geometries are possible. At the proximal end of the overcenter arm, a loop-shaped attachment feature 24 is fixed to the overcenter arm by being screwed onto the threaded pin 23 and fixed by a fixation bolt 25. The fixation bolt 25 enables adjusting the length of the overcenter arm 21. The loop-shaped attachment feature 24 is designed to engage with a hook-shaped anchor feature 26 fixed to the rear wall 2 of the chopper housing, adjacent the aperture 12.

At its distal end, the overcenter arm 21 is pivotably coupled to the lever 20. The overcenter arm 21 is pivotable relative to said lever 20 about a second pivot axis 30, distanced from the first pivot axis 15 and parallel thereto. When the overcenter arm 21 is in the unlocked position illustrated in Figures 4 and 5, the attachment loop 24 can be placed behind the anchor feature 26 manually. In order to lock the overcenter mechanism, the distal end of the overcenter arm 21 needs to be brought into an overcenter position opposite the mutually engaged attachment and anchor features 24,26. To facilitate this securing action, the overcenter arm comprises a bent portion 31 enabling the second pivot axis 30 to be brought into the overcenter position. These features are known as such, being the basic characteristics of any overcenter mechanism.

The illustrated mechanism is distinguished from existing mechanisms by two combined characteristics : firstly, the dimensions of the overcenter mechanism are designed in such a way that the mechanism cannot be locked or unlocked by manual force, i.e. an auxiliary tool is needed to perform the locking and unlocking. Therefore, the overcenter mechanism is dimensioned so that pivoting the rod 14 requires a torque of at least 1Nm, preferably 1,5Nm and even more preferably 2Nm. Secondly, the rod 14 is configured for engagement with a gripping tool suitable for forcing the rotation of the rod by an amplified force, i.e. amplified compared to any force that can be exerted on the rod by manually manipulating any portion of the overcenter mechanism.

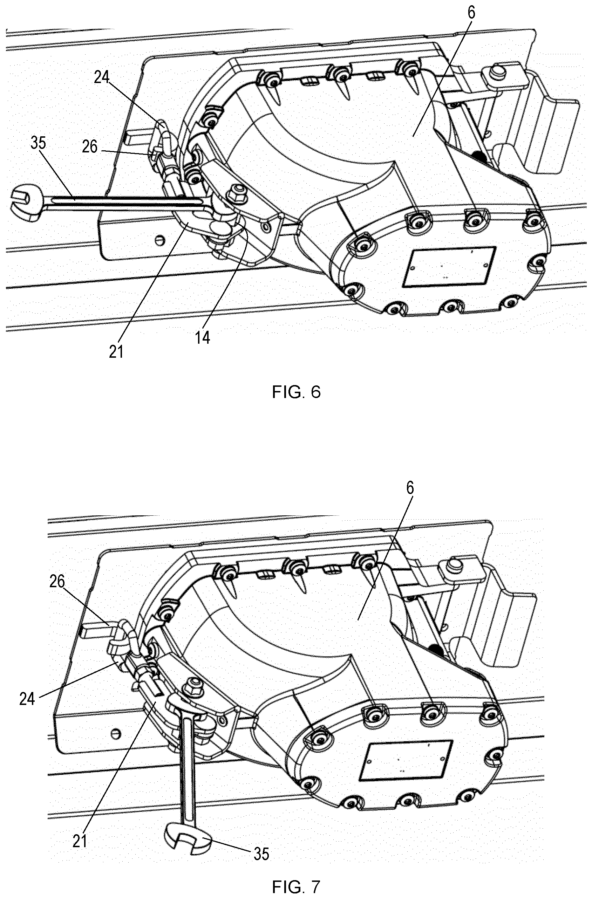

In the case shown, the rod 14 exhibits a hexagonal cross-section, enabling the rod to be rotated with the help of a wrench 35, as illustrated in Figures 6 and 7. These images illustrate how the rod 14 is rotated forcibly using the wrench 35, thereby activating the leverage action of the lever 20, and bringing the second pivot axis 30 and thereby the distal end of the overcenter arm 21 into the overcenter position, effectively locking the camera-door 6.

Opening the camera-door also requires the wrench 32 for rotating the rod 14 in the opposite direction. This forces the distal end of the overcenter arm 21 out of the overcenter position, thereby enabling to disengage the loop 24 from the anchor feature 26 and open the camera-door 6 by swinging it about the hinge axis 10.

The fact that an auxiliary tool is needed for locking and unlocking the camera-door represents a safety feature by the fact that an operator is incapable of opening the camera-door manually. The necessity of the auxiliary tool is likely to remind the operator of the fact that opening the camera-door requires suitable attention, and that such action is unsafe when the chopper is operational for example.

The invention is not limited to the illustrated embodiment. The rod 14 can have a polygonal cross-section other than the illustrated hexagonal cross-section, for example a square cross-section. The polygonal cross-section can extend along the full length of the rod 14 as shown in the illustrated embodiment, or be limited to a given portion of said length, for example situated in a central part of the rod 14.

The invention is not limited to embodiments wherein the required tool is a wrench. For example, the rod 14 could be provided with a transversal hole oriented perpendicularly to the rod, enabling to insert a pin into said hole and using the pin as a lever for pivoting the rod 14. The transversal hole may penetrate the rod or the hole can be a blind hole, both enabling the partial or complete insertion of a suitable pin to be used as a lever for pivoting rod 14. In fact, any rod having any cross-section can be applied if the rod is accessible from the side by a suitable gripping tool configured to apply a high gripping force on the rod, for example locking pliers or similar tools.

The invention is not limited to embodiments wherein the rod is designed to be gripped laterally by a wrench or pin. According to other embodiments, the rod 14 could be provided with an internal polygonal recess at the top and/or bottom end of the rod, configured to be engaged by an Allen wrench or similar tool for forcibly pivoting the rod.

According to an embodiment, one or more symbolic signs are attached in the vicinity of an aperture 12 closed off by a door provided with a securing mechanism according to the invention. The signs are to the effect that an operator is informed that the securing mechanism requires a tool for releasing and re-securing the mechanism.

The invention is not limited to securing mechanisms applied in conjunction with a camera. Any hinged door in an agricultural implement like a combine or forage harvester can be equipped with an overcenter mechanism in accordance with the invention.

The invention is applicable to other compartments of a combine harvester besides the chopper compartment and on other implements besides a combine harvester. According to combine-related embodiments, the overcenter mechanism of the invention may be mounted on inspection and/or cleaning apertures on a sidewall of a housing of the clean grain elevator and/or on a sidewall of a housing of a clean grain auger. Other embodiments include the following :
- a sugar cane harvester with the mechanism installed for locking an aperture in a wall of the chopper compartment,
- a baler with the mechanism installed for locking an aperture in a wall of the crop intake compartment,
- a forage harvester with the mechanism installed for locking an aperture in the sidewall of the spout for ejecting processed crops from the harvester.

## Claims

1. An agricultural implement comprising a compartment (1) fully or partially enclosed by walls (2,3) and a hinged door (6) configured to open or close an aperture (12) in one of said walls by rotation of the door about a hinge axis (10), wherein locking and unlocking the door is enabled by locking and unlocking an overcenter mechanism, said mechanism comprising:
- a rod (14) extending in a longitudinal direction that is essentially parallel to the hinge axis (10), wherein the rod is pivotable about a first pivot axis (15) that is in a fixed position relative to the door (6),
- a lever (20) fixed to or integral with the rod (14),
- an overcenter arm (21) having a proximal end and a distal end, wherein the distal end is pivotably connected to the lever (20), the overcenter arm being pivotable relative to the lever about a second pivot axis (30) oriented parallel to the first pivot axis (15) and distanced therefrom, and wherein the proximal end of the overcenter arm (21) comprises an attachment feature (24),
- an anchor feature (26) fixed to the wall (2), wherein the attachment feature (24) is configured to engage and interlock with said anchor feature (26),
wherein the overcenter mechanism is configured to be locked by engaging the attachment feature (24) with the anchor feature (26) and by forcing the distal end of the overcenter arm (21) into an overcenter position lying opposite the interlocked attachment and anchor features (24,26),
**characterized in that** the overcenter mechanism is dimensioned so that locking and unlocking the mechanism requires pivoting the rod (14) with the help of an auxiliary tool.

2. The agricultural implement according to claim 1, wherein the compartment (1) has a crop inlet and a crop outlet wherein crop is moved from the inlet of the compartment to the outlet, possibly with the crop being processed between the inlet and the outlet.

3. The agricultural implement according to claim 1 or 2, wherein the overcenter mechanism is dimensioned so that pivoting the rod (14) requires a torque of at least 1Nm, preferably 1,5Nm and even more preferably 2Nm.

4. The agricultural implement according to any one of the preceding claims, wherein the rod (14) exhibits a polygonal cross-section along at least a portion of its length in said longitudinal direction, enabling the use of a wrench (35) suitable for engaging said cross-section, as said auxiliary tool.

5. The agricultural implement according to claim 4, wherein the rod exhibits a square or hexagonal cross-section.

6. The agricultural implement according to any one of the preceding claims, wherein the rod (14) is provided with a hole oriented perpendicularly with respect to said longitudinal direction, enabling the use of a pin inserted in said hole, to thereby serve as said auxiliary tool.

7. The agricultural implement according to any one of claims 1 to 3, wherein the rod (14) is provided with an internal polygonal recess at the top and/or bottom end of the rod, configured to be engaged by a tool for forcibly pivoting the rod.

8. The agricultural implement according to any one of the preceding claims, wherein the door (6) provides visual and/or cleaning access to the interior of the compartment.

9. The agricultural implement according to claim 8, wherein the door is formed by the housing (6) of a camera configured to monitor said interior.

10. The agricultural implement according to any one of the preceding claims, wherein the implement is a combine harvester comprising :
- a chopper and spreader arrangement comprising a chopper compartment (1),
- a clean grain elevator comprising a housing that forms a compartment,
- one or more clean grain augers comprising a housing that forms a compartment,
and wherein the compartment comprising said door and aperture and said overcenter mechanism is one or more of the following :
- the chopper compartment,
- the housing of the clean grain elevator,
- the housing of one or more of the clean grain augers.

11. The agricultural implement according to any one of claims 1 to 9, wherein the implement is a sugar cane harvester comprising a walled chopper compartment comprising an aperture covered by a hinged door, and wherein said door is equipped with said overcenter mechanism.

12. The agricultural implement according to any one of claims 1 to 9, wherein the implement is a forage harvester comprising a spout for ejecting processed crops from the harvester, and wherein the spout comprises an aperture in a sidewall of the spout, covered by a hinged door, and wherein said door is equipped with said overcenter mechanism.

13. The agricultural implement according to any one of claims 1 to 9, wherein the implement is a baler, comprising a walled crop intake compartment comprising an aperture covered by a hinged door, and wherein said door is equipped with said overcenter mechanism.
